# EUROPEAN PATENT APPLICATION

(11) **EP 2 163 945 A1**
(43) Date of publication of application: **17.03.2010**
(21) Application number: 09169909.0
(22) Date of filing: 10.09.2009
(51) Int. Cl.: G02F 1/167

(54) **Electrophoretic display device, a manufacturing method for an electrophoretic display device, and a wristwatch**

(30) Priority: 11.09.2008 JP 2008233237
(71) Applicant: Seiko Epson Corporation, Shinjuku-ku, Tokyo (JP)
(72) Inventor: Kanbayashi, Hatsuki, Nagano 392-8502 (JP)
(74) Representative: HOFFMANN EITLE

(57) **Abstract**

An electrophoretic display device has at least a laminate (100) including a transparent substrate (31), a transparent electrode layer (32), an electrophoretic display layer (33), a drive electrode layer (34) having drive electrodes (34a) for driving the electrophoretic display layer, and a back substrate (35) laminated sequentially from the display surface side, and a protective sheet (110) that covers and seals the laminate from both sides. The transparent electrode layer is formed as a common electrode to the electrophoretic display layer. A through-hole unit (5b) is formed passing through the thickness of the laminate. An inside ring member (120) that has substantially the same thickness as the laminate is disposed substantially flush to both sides of the laminate with a specific seal width sealing the inside circumference edge of a first through-hole formed at a specific position through the thickness of the laminate. The protective sheet covers and seals the substantially flush laminate and inside ring member from both sides, and the ring hole inside the ring member is the through-hole unit.

## Description

### BACKGROUND

### 1. Technical Field

The present invention relates to an electrophoretic display device, a manufacturing method for an electrophoretic display device, and a wristwatch.

### 2. Related Art

Electrophoretic displaydevices that use an electrophoretic suspension composed of a fluid dispersion medium and electrophoretic particles (that is, a display material of which the optical characteristics change in response to an electrical stimulus), and use the change in the optical characteristics of the electrophoretic suspension when the distribution of the electrophoretic particles changes as a result of applying an electric field, are known from the literature.

This type of electrophoretic display device can be rendered thin and at a low cost because there is no need for a backlight, and are widely seen as a next-generation display device because of their wide viewing angle, high contrast, and ability to retain displayed content without supplying power (also called "image retention" or a display "memory effect").

The electrophoretic suspension of this electrophoretic display device is sealed inside microcapsules, and the microcapsules are sandwiched between a transparent substrate with a common electrode (transparent electrode) and a drive substrate with pixel electrodes (drive electrodes).

By sealing the electrophoretic suspension in microcapsules, the suspension can be prevented from flowing out during display panel production, and settling or agglomeration of the electrophoretic particles can be reduced. Note that plastic materials are generally used for these substrates for flexibility, resistance to cracking, and light weight. Technologies for microencapsulating such a suspension are known from the literature.

For example, Japanese Unexamined Patent Appl. Pub. JP-A-S64-86116 teaches an electrophoretic display device having a dispersion containing electrophoretic particles sealed between a pair of opposing electrode panels of which at least one is transparent.

Japanese Unexamined Patent Appl. Pub. JP-A-H10-149118 teaches an electrophoretic display device in which transparent electrodes are formed on the opposing surfaces of a transparent electrode that is transparent to light and an opposing device substrate (back substrate) that is opaque, and numerous microcapsules are disposed in the closed space formed between these transparent electrodes.

Microencapsulating the dispersion in this way has been used to make sealing the dispersion inside the display panel easier and to achieve a good display.

Because such electrophoretic display devices can thus be rendered small and thin like liquid crystal display panels, electrophoretic display devices are also used in wristwatches.

In this application a through-hole must be provided in the center of the display panel in order to pass therethrough the hand stem on which the hour hand and minute hand are mounted.

However, when a through-hole opening is rendered in an electrophoreticdisplaydevice, the edge of the electrophoretic display layer is exposed at the hole, thus enabling water vapor and moisture to penetrate the display layer, which is susceptible to moist or humid environments, possibly resulting in the electrical characteristics deteriorating.

To solve this problem, the laminate including the display layer containing the microcapsules is coated with a water-resistant transparent protective coating for protection.

However, a problem that occurs when such a protective sheet is used is that it is difficult to seal the through-hole rendered in the electrophoretic display device with a seal that is narrow enough to prevent the through-hole from detracting from the product appeal of a wristwatch with a display panel while also maintaining sufficient water resistance.

In addition, a problem that occurs during display panel manufacture is that the pressure applied when laminating the protective seal causes damage to be focused locally on the area around the through-hole, easily resulting in defects such as localized failure from such localized stress.

### SUMMARY

An electrophoretic display device, a manufacturing method therefor, and a wristwatch according to the present invention enable maintaining a high degree of water resistance without defects such as crushing or failure in the area around a through-hole even when a through-hole is provided for the hand stem, for example.

A first aspect of the invention is an electrophoretic display device having at least a laminate including a transparent substrate, a transparent electrode layer, an electrophoretic display layer, a drive electrode layer having drive electrodes for driving the electrophoretic display layer, and a back substrate laminated sequentially from the display surface side, and a protective sheet that covers and seals the laminate from both sides. The transparent electrode layer is formed as a common electrode to the electrophoretic display layer. A through-hole unit is formed passing through the thickness of the laminate. An inside ring member that has substantially the same thickness as the laminate is disposed substantially flush to both sides of the laminate with a specific seal width sealing the inside circumference edge of a first through-hole formed at a specific position through the thickness of the laminate. The protective sheet covers and seals the substantially flush laminate and inside ring member from both sides, and the ring hole inside the ring member is the through-hole unit.

This aspect of the invention uses a configuration in which a ring member that is substantially the same thickness as the laminate is disposed substantially flush with both sides of the laminate sealing the inside circumference edge of the first through-hole formed at a specific position in the laminate.

As a result, damage caused by the pressure applied when coating and sealing both sides of the laminate with the protective sheet can be reliably prevented from occurring locally around the first through-hole in the laminate, and wrinkles in the protective sheet caused by the applied pressure deforming the laminate around the first through-hole can be prevented. Therefore, even if a through-hole is formed at a specific position in the laminate, the invention can effectively seal the laminate by means of the protective sheet without detracting from the appearance of the area around the through-hole, and an electrophoretic display device with excellent water resistance can be achieved.

In addition, the invention can assure sufficient strength in the area around the through-hole even though a ring member with a narrow seal width is used. An electrophoretic display device with a through-hole that is aesthetically pleasing can therefore be achieved.

Preferably, the first through-hole is rendered with an inside diameter that is substantially equal to the outside diameter of the ring member.

Yet further preferably, a transparent water-resistant protective sheet that functions as a waterproof sheet in the normal temperature range anticipated for wristwatch use is used as the protective sheet disposed at least on the electrophoretic display layer side.

The electrophoretic display device according to another aspect of the invention has an outside ring member that has substantially the same thickness as the laminate and is disposed sealing the outside circumference edge of the laminate substantially flush with both sides of the laminate, and the protective sheet covers and seals the substantially flush laminate, inside ring member, and outside ring member from both sides.

By thus using a configuration in which a ring member of the same thickness as the laminate is disposed sealing the outside circumference edge of the laminate flush with both sides of the laminate, pressure damage that occurs when the laminate is coated and sealed from both sides by the protective sheet can be reliably prevented from occurring at the outside edge area of the laminate.

In a third aspect of the invention the ring member is formed as a member with greater mechanical strength than the laminate.

This aspect of the invention can even more reliably prevent the pressure damage that can occur when the laminate is coated by the protective sheet.

For example, the ring member may be a ring member made of metal.

Another aspect of the invention is a wristwatch that has a movement, a display hand attached to a hand attachment member of the movement, and a display panel disposed between the movement and the display hand inside a timepiece case, uses an electrophoretic display device according to the invention as the display panel, and has a through-hole unit formed in the electrophoretic display device as a stem hole through which the hand attachment member passes.

This aspect of the invention enables effectively sealing the through-hole in which the hand attachment member (hand stem) of the hour hand and second hand of an analog wristwatch is inserted without detracting from the appearance of the area around the hole. The size of the through-hole rendered as a stem hole can thus be reduced, and the water resistance of the area around the through-hole can be reliably assured using a ring member with a narrow seal width. A wristwatch that uses an electrophoretic display device as a display panel with a good appearance and functions stably for a long time can thus be achieved.

Another aspect of the invention is a method of manufacturing an electrophoretic display device electrophoretic display device having at least a laminate including a transparent substrate, a transparent electrode layer, an electrophoretic display layer, a drive electrode layer having drive electrodes for driving the electrophoretic display layer, and a back substrate laminated sequentially from the display surface side, and a protective sheet that covers and seals the laminate from both sides, wherein the transparent electrode layer is formed as a common electrode to the electrophoretic display layer, and a through-hole unit is formed passing through the thickness of the laminate. The manufacturing method has steps of : disposing an inside ring member that has substantially the same thickness as the laminate to the inside circumference edge of a first through-hole formed through the thickness of the laminate so that the inside ring member is substantially flush to both sides of the laminate; and covering and sealing the substantially flush laminate and inside ring member from both sides with the protective sheet, and rendering the ring hole inside the ring member as the through-hole unit.

This aspect of the invention enables manufacturing an electrophoretic display device with a through-hole without causing pressure damage to the area around the through-hole in the laminate.

The present invention renders the ring hole of the ring member as the through-hole unit. As a result, the first through-hole is preferably only the seal width of the ringmember larger than the desired through-hole.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a front view of a wristwatch according to a display device according to the invention.

FIG. 2 is a side section view of the wristwatch.

FIG. 3 is a side section view of an electrophoretic display device.

FIG. 4 is a process diagram describing a manufacturing process of the electrophoretic display device.

FIG. 5 is a process diagram describing a manufacturing process of the electrophoretic display device.

FIGs. 6A and 6B describe other methods for comparison.

FIGs. 7A to 7C describe the steps of cutting electrophoretic display sheets from electronic paper.

FIG. 8A is a schematic plan view of the device substrate, and FIG. 8B is a schematic plan view of a laminate for a wristwatch obtained by laminating an electrophoretic sheet blank and device substrate together.

FIG. 9 is a schematic plan view after the ring member and protective sheet are affixed to the laminate for a wristwatch.

FIGs. 10A and 10B schematically describe an electrophoretic display device for a wristwatch obtained by cutting the unnecessary outside part of the protective sheet from the workpiece shown in FIG. 9.

FIG. 11 is a schematic section view of the positioning jig for the laminate shown in FIG. 9.

FIG. 12 shows an analog wristwatch movement assembled to the electrophoretic display device for a wristwatch shown in FIG. 11.

FIG. 13 describes an example of an electrophoretic display device having a ring member disposed around the outside of a laminate.

### DESCRIPTION OF EMBODIMENTS

A preferred embodiment of the present invention is described below with reference to the accompanying figures.

* Configuration

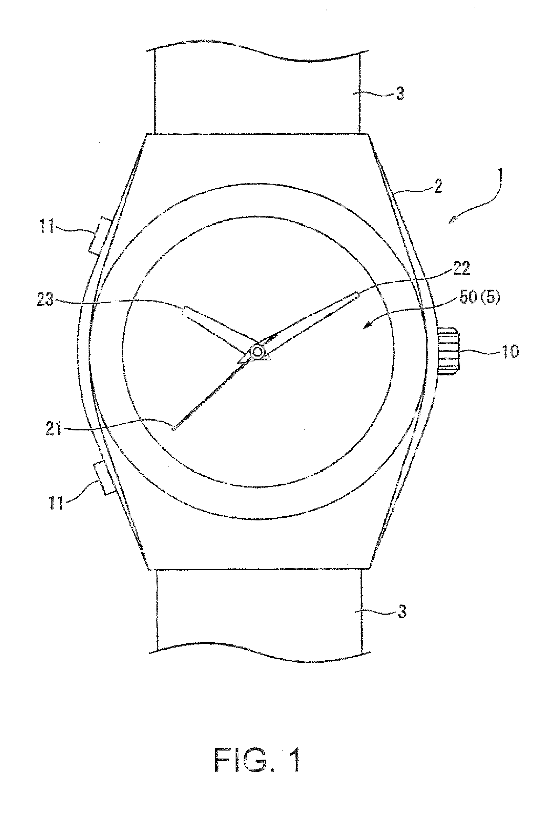

FIG. 1 is a front view of a wristwatch 1 (electronic device) having an electrophoretic display device according to a preferred embodiment of the invention.

As shown in the figure, the electronic timepiece 1 has a watch case 2 and a pair of wrist bands 3 that are connected to the watch case 2.

The watch case 2 is made of metal such as stainless steel, or plastic. A display unit 50, second hand 21, minute hand 22, and hour hand 23 are disposed to the front of the watch case 2. A crown 10 and operating buttons 11 are provided as operating devices on the side of the watch case 2. The crown 10 is connected to a stem (not shown in the figure) inside the case, and can be rotated freely and pushed in and out in multiple steps (such as two steps) in unison with the stem.

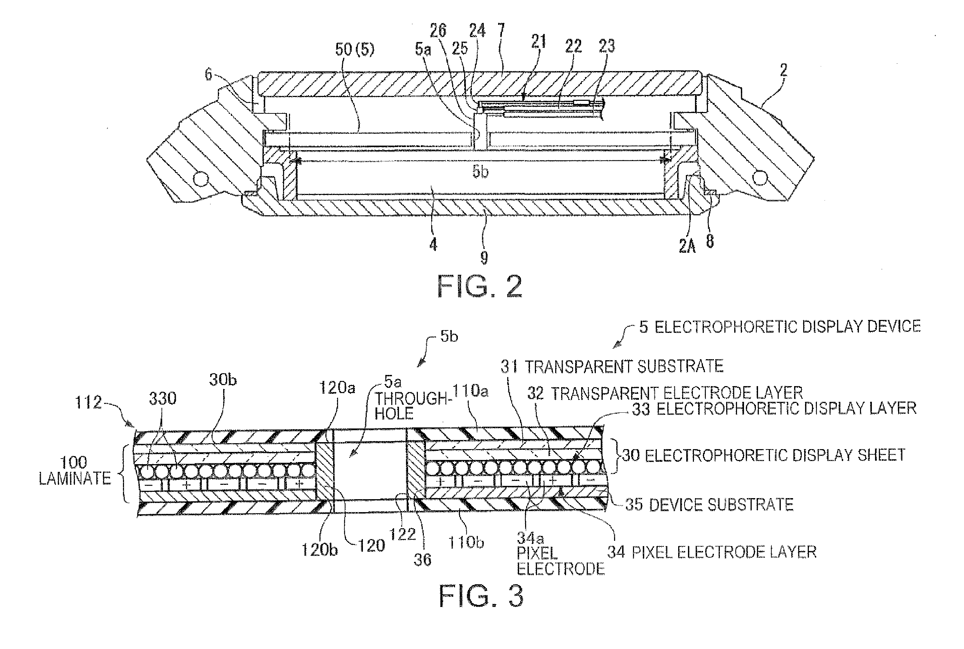

FIG. 2 is a side section view of the electronic timepiece 1.

As shown in the figure, a housing unit 2A is rendered inside the watch case 2. A movement 4 and display unit 50 are housed inside the housing unit 2A.

The movement 4 is a movement mechanism (not shown in the figure) whereby analog hands including a second hand 21, minute hand 22, and hour hand 23 are interconnected. The movement 4 functions as a time display unit that displays the set time by rotationally driving the analog hands 21 to 23.

The display unit 50 is rendered by an active matrix drive electrophoretic display device 5, for example, and is disposed on the watch face side of the movement 4. The display surface of the display unit 50 is round in this embodiment of the invention. The shape of the display surface is not limited to being round, however, and may be square, octogonal, 16-sided, or other desired shape instead. The electrophoretic display device 5 may also be a segment-driven electrophoretic display device.

A through-hole 5a is formed in the center of the electrophoretic display device 5 as a through-passage that communicates the front and back sides. Stems on which the seconds wheel 24, the second wheel 25, and the hour wheel 26 of the driving mechanism (not shown in the figure) of the movement 4 are mounted are inserted through this through-hole 5a. The second hand 21, minute hand 22, and hour hand 23 noted above are mounted on the distal ends of these stems. the electrophoretic display device 5 displays content in the display area 5b denoted by broken lines in the figure. The through-hole 5a is therefore disposed within the display area 5b when seen in plan view.

A transparent crystal 7 made of glass or plastic is disposed on one side of the housing unit 2A (thewatch face side) . The transparent crystal 7 is press fit and held in the housing unit 2A by an intervening compression ring 6 made of plastic or metal. A back cover 9 is screwed to the opposite side of the housing unit 2A (the back side of the timepiece) with an intervening gasket 8. The back cover 9 and transparent crystal 7 seal the inside of the watch case 2.

FIG. 3 is a schematic section view showing the configuration of the display area 5b part of the electrophoretic display device 5. The electrophoretic display device 5 is described below using primarily an active matrix electrophoretic display device by way of example, but the electrophoretic display device 5 may be a segment-driven electrophoretic display device instead.

As shown in the figure, the electrophoretic display device 5 includes at least a laminate 100 and protective sheets 110a and 110b that cover and seal the laminate 100 from both sides, and has a through-hole 5a as a through-passage passing through the thickness of the laminate 100.

The laminate 100 includes an electrophoretic display sheet 30, a pixel electrode layer 34 (corresponding to a drive electrode layer), and a device substrate 35 (corresponding to a back substrate) layered together sequentially from the watch face side. The electrophoretic display sheet 30 has a transparent substrate 31, transparent electrode layer 32, and electrophoretic display layer 33 laminated together from the display surface side. The pixel electrode layer 34 has a plurality of pixel electrodes 34a for driving the electrophoretic display layer 33.

The transparent electrode layer 32 is formed as a common electrode for the electrophoretic display layer 33. A semiconductor circuit layer that supplies voltage to the pixel electrodes 34a is formed on the device substrate 35. In this embodiment of the invention the semiconductor circuit layer is rendered by a TFT circuit layer. The TFT circuit layer has a plurality of scan lines and a plurality of signal lines rendered perpendicularly to each other, and a switch for controlling the voltage supply to the pixel electrodes 34a is disposed to the intersections between these lines.

When the electrophoretic display device 5 is a segment driven electrophoretic display device, the pixel electrodes 34a correspond to the segment electrodes (corresponding to drive electrodes), the pixel electrode layer 34 corresponds to the segment electrode layer (corresponding to the drive electrode layer), and the device substrate 35 corresponds to the wiring board (corresponding to the back substrate) wired to drive circuits not shown. The pixel electrodes 34a are rendered by copper foil affixed to the wiring board, for example.

A first through-hole 36 is formed through the thickness of the laminate 100 at a position corresponding to the through-hole 5a. An inside ring member 120 that seals the inside circumference edges is disposed in the first through-hole 36.

The inside diameter of this first through-hole 36 is substantially equal to the outside diameter of the inside ring member 120.

The inside ring member 120 is a metal washer with substantially the same thickness d as the laminate 100. The ring member 120 is disposed to the inside circumference edge of the first through-hole 36 in the laminate 100 substantially flush to the top and bottom surfaces of the laminate 100, and seals the inside circumference edges of the laminate 100.

The protective sheets 110a and 110b cover and seal both front and back surfaces of the substantially flush laminate 100 and inside ring member 120 without closing the end openings to the ring hole 122 in the ring member 120.

The ring hole 122 passing through the thickness of the laminate 100 and protective sheets 110a and 110b inside the ring member 120 is thus formed as the through-hole 5a.

The device substrate 35 has a semiconductor circuit layer not shown rendered on an inorganic substrate such as a glass substrate, quartz substrate, silicon substrate, or gallium arsenide substrate, or a plastic substrate made of polyimide, polyethylene terephthalate (PET), polyethylene naphthalate (PEN), polymethylmethacrylate (PMMA), polycarbonate (PC), polyethersulfone (PES), or aromatic polyester (liquid crystal polymer), for example. The plane area in which the semiconductor circuits are formed is substantially coincident to the display area 5b. The thickness of the device substrate 35 is approximately 0.01 to 0.5 mm. Note that this embodiment of the invention preferably uses an inorganic substrate.

When the electrophoretic display device 5 is a segment driven electrophoretic display device, the wiring board (corresponding to device substrate 35) is made of polyimide or glass epoxy, for example, and has copper foil affixed to the surface forming the segment electrodes (corresponding to pixel electrodes 34a).

The transparent substrate 31 is the substrate that supports the electrophoretic display layer 33, and is a substrate made from a material with high optical transparency such as polyethylene terephthalate (PET), polyethersulfone (PES), or polycarbonate (PC). The surface side of the transparent substrate 31 is the display surface of the electrophoretic display device 5.

The transparent electrode layer 32 that functions as a common electrode is a transparent electrode material such as ITO (indium tin oxide). This transparent electrode layer 32 functioning as the common electrode is disposed over substantially the entire display area 5b. More specifically, the pixel electrode layer 34 is rendered so that the individual pixels of the display area 5b can be addressed, but the transparent electrode layer 32 functioning as the common electrode is common to all pixels.

The electrophoretic display layer 33 includes a plurality of microcapsules 330 and a binder (not shown in the figure) that holds the microcapsules 330. This binder may also function as an adhesive between the microcapsules 330 and the transparent electrode layer 32 and pixel electrode layer 34. The binder is an adhesive that has good affinity with the capsule wall membrane of the microcapsules 330, excellent adhesion to the transparent electrode layer 32 and pixel electrode layer 34, and good insulation properties.

The electrophoretic display layer 33 may also have an adhesive layer (not shown in the figure) on its back side surface (the side towards the pixel electrode layer 34) to improve adhesion with the pixel electrode layer 34. The adhesive layer is preferably an adhesive with excellent adhesion to the pixel electrode layer 34 and good insulation properties.

The microcapsules 330 are filled with an electrophoretic particle suspension fluid in which numerous charged particles are dispersed. Both black electrophoretic particles ("black particles" below) and white electrophoretic particles ("white particles" below) are dispersed in the electrophoretic particle suspension fluid, rendering an electrophoretic layer with a two color particle dispersion. The black particles and white particles are oppositely charged, and in this embodiment of the invention the black particles are negatively charged while the white particles are positively charged.

The diameter of the microcapsules 330 in this embodiment of the invention is approximately 30 µm (0.03 mm), the diameter of the black particles is 10 - 30 nm, and the diameter of the white particles is 100 - 300 nm.

a The pair of protective sheets 110a and 110b are laminated on opposite sides of the laminate 100. The electrophoretic display device 5 is thus completely covered on front and back sides by these protective sheets 110a and 110b. In other words, with the electrophoretic display device 5 disposed inside the pair of protective sheets 110a and 110b, a seal unit 112 is formed by sealing the areas between the circumferential edges on the inside circumference and outside circumference sides with an adhesive. An adhesive made from a thermoplastic resin, for example, may be used as the adhesive. In this embodiment of the invention the protective sheets 110a and 110b are welded around the entire circumference thereof, rendering the seal unit 112, and the seal unit 112 encloses the entire circumference of the electrophoretic display device 5.

The protective sheets 110a and 110b are sized to completely cover the entire electrophoretic display device 5, are round in this embodiment of the invention, and have a two-layer construction including a plastic layer made from a polymer material and a barrier layer made froman inorganic material. When the electrophoretic display device 5 is sealed using these protective sheets 110a and 110b, the protective sheets 110a and 110b are disposed with the barrier layer instead of the plastic layer on the substrate side (inside). When the barrier layer is to the outside, there is the danger of moisture passing to the inside through defects in the barrier layer. However, by disposing the barrier layer of the protective sheets 110a and 110b instead of the plastic layer on the substrate side, the outside plastic layer can prevent moisture from penetrating inside even if defects occur in the barrier layer. In addition, while the plastic layer provides an excellent moisture barrier, many plastics also absorb moisture, and if the plastic layer is disposed instead of the barrier layer on the substrate side, moisture absorbed by the plastic layer can result in moisture penetrating inside the electrophoretic display device 5. Therefore, by disposing the plastic layer on the outside and the barrier layer to the inside, penetration of moisture directly from the plastic layer to the electrophoretic display device 5 can be prevented.

Materials that can be advantageously used for the barrier layer include inorganic materials such as silicon oxide, silicon nitride, aluminum oxide, and titanium oxide, or metal foils such as aluminum foil, copper foil, or cobalt foil.

Exemplary materials for the plastic layer include plastics such as a polyester such as polyethylene terephthalate (PET), polyethylene (PE), polypropylene (PP), polyethersulfone (PES), or polyethylene naphthalate (PEN), or a polycarbonate (PC), or a laminate of a plastic film with a metal thin film or metal foil such as aluminum foil, copper foil, or cobalt foil.

The through-hole 5a described above is formed in the electrophoretic display device 5 passing through the device substrate 35, pixel electrode layer 34, electrophoretic display sheet 30, and protective sheets 110a and 110b at substantially the center of the display area 5b when seen in plan view. The through-hole 5a is formed perpendicularly to the plane surfaces (the horizontal surfaces as seen in the figure) of the device substrate 35, pixel electrode layer 34, electrophoretic display sheet 30, and protective sheets 110a and 110b.

The ring member 120 has a ring hole 122 inside. This ring hole 122 functions as the through-hole 5a described above, and the stems of the seconds wheel 24, second wheel 25, and hour wheel 26 of the drive mechanism (not shown in the figure) of the movement 4 are inserted to the ring hole 122. The seal width of the ring member 120 with the ring hole 122 rendered therein is approximately 0.65 mm.

Both ends of the inside ring member 120 in the direction in which the through-hole 5a is formed (verticallyas seen in the figures), that is, end parts 120a and 120b, are covered by the protective sheets 110a and 110b while keeping the ring hole 122 open.

* Operation

The operation of the electrophoretic display device 5 described above is described briefly below.

When voltage is applied between a pixel electrode 34a and the common electrode (transparent electrode layer 32) so that the voltage of the common electrode is relatively high, the negatively -charged black electrophoretic particles are caused to migrate inside the microcapsules to the pixel electrode side by Coulombs force, and the positively-charged white electrophoretic particles are caused to migrate inside the microcapsules to the common electrode side by Coulombs force. As a result, the white particles gather at the transparent electrode layer 32 side inside the microcapsules, and the color of the white particles (that is, white) is displayed in the display area 5b of the electrophoretic display device 5.

Conversely, whenvoltage is appliedbetweenapixel electrode and the common electrode so that the potential of the pixel electrode is relatively high, the positively -charged white electrophoretic particles are caused to migrate to the pixel electrode side by Coulombs force, and the negatively -charged black electrophoretic particles are caused to migrate to the common electrode side by Coulombs force. As a result, the black particles gather at the transparent electrode layer 32 side inside the microcapsules, and the color of the black particles (that is, black) is displayed in the display area 5b of the electrophoretic display device 5.

Note that when the electrophoretic display device 5 is a segment driven electrophoretic display device, the foregoing pixel electrodes correspond to the segment electrodes, but the operating principle is otherwise the same.

* Manufacturing method

A method of a manufacturing the electrophoretic display device 5 described above is described next. Note that the electrophoretic display device 5 is an active matrix drive electrophoretic display device by way of example below, but the electrophoretic display device 5 may be a segment-driven electrophoretic display device.

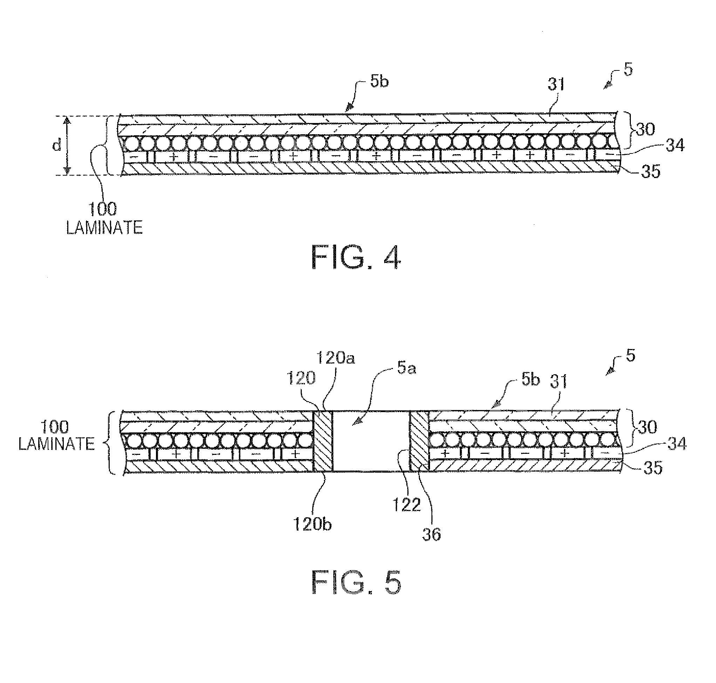

As shown in FIG. 4, a pixel electrode layer 34 is formed on a device substrate 35 on which devices and wiring lines are formed, and an electrophoretic display sheet 30 is then affixed to the pixel electrode layer 34 to form the laminate 100.

As shown in FIG. 5, a first through-hole 36 is formed as a first through-passage substantially in the center of the display area 5b of the laminate 100 passing through the device substrate 35, pixel electrode layer 34, and electrophoretic display sheet 30.

Note that the laminate 100 may be rendered by laminating the electrophoretic display sheet 30, the pixel electrode layer 34, and the device substrate 35 as described above after preforming the first through-holes 36 therein.

The ring member 120 with the same thickness as the laminate 100 is then disposed to the inside circumference of the first through-hole 36, sealing the inside circumference surface of the first through-hole 36 in the laminate 100.

The sides of the laminate 100 and both sides of the ring member 120 are rendered flush with no step therebetween at this time.

Both sides of the laminate 100 and ring member 120 thus disposed substantially flush are then sealed by the protective sheets 110a and 110b as shown in FIG. 3 without closing the ends of the ring hole 122 in the ring member 120.

At this time the laminate 100 and inside ring member 120 are disposed with their surfaces flush and no step therebetween. The mechanical strength of the ring member 120 is also greater than the laminate 100. As a result, when the protective sheets 110a and 110b are laminated to the opposite sides of the laminate 100 and ring member 120, pressure damage localized around the first through-hole 36 in the laminate 100 can be prevented, and damage to the stem hole of the electrophoretic display device 5 rendering the display panel of the wristwatch, that is, to the electrophoretic display sheet 30 in the area around the through-hole 5a, can be prevented.

Furthermore, because the laminate 100 and ring member 120 are flush without a step therebetween, wrinkles in the protective sheets 110a and 110b around the through-hole can be prevented when the protective sheets 110a and 110b are laminated to both sides of the laminate. The appearance of the wristwatch as a display panel can thus be improved.

In addition, the ring member 120 is made using a material such as metal with higher mechanical strength than the laminate 100. As a result, high water resistance can be assured even if the seal width of the ring member 120 is narrow, and this also helps to improve the appearance of the wristwatch.

This embodiment of the invention uses a metal washer as the ring member 120. The seal width can therefore be adjusted by controlling the wall thickness of the washer, and the seal width can be adjusted easily by replacing the washer.

Note that when the electrophoretic display device 5 is a segment driven electrophoretic display device, the device substrate corresponds to the wiring board, the pixel electrode layer corresponds to the segment electrode layer, and the electrophoretic display device 5 can be manufactured using the same process.

* Comparison

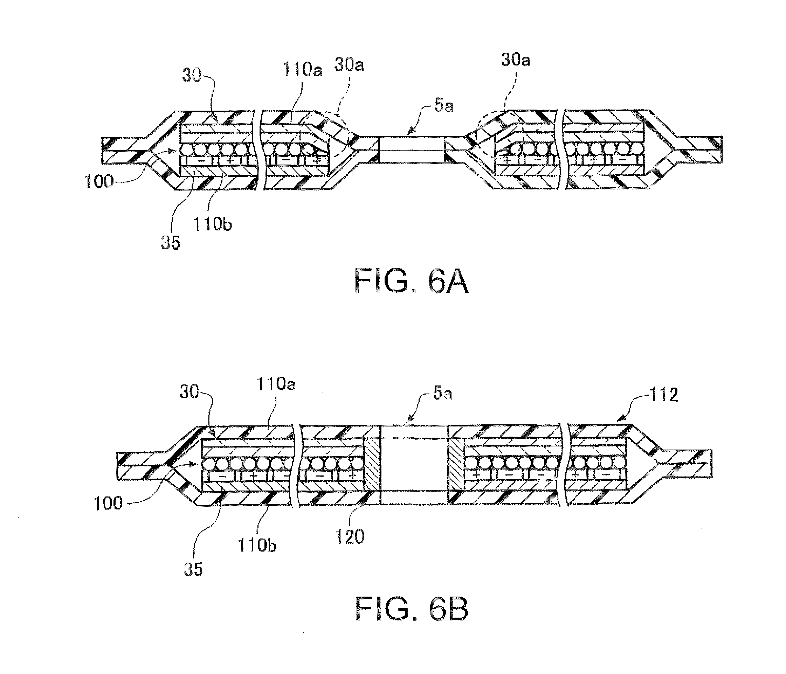

A comparison sample is shown in FIG. 6A, and this embodiment of the invention is shown schematically in FIG. 6B.

The comparison sample shown in FIG. 6A anticipates a configuration not having a ring member 120. When the protective sheets 110a and 110b are laminated to the opposite sides of the laminate 100 in this configuration, pressure damage from lamination is locally concentrated on the area around the through-hole in the electrophoretic display sheet 30, and this localized stress can easily lead to defects such as crushing 30a where pressure is applied.

When such crushing 30a occurs, wrinkles are also caused in the protective sheets 110a and 110b covering the area around the through-hole by the crushing 30a.

With the electrophoretic display device 5 according to this embodiment of the invention shown in FIG. 6B, however, a ring member 120 of the same thickness as the crown 10 is disposed in the first through-hole 36 in the laminate 100, and the laminate 100 and both sides of the inside ring member 120 are thus rendered flush with no step therebetween.

This configuration eliminates the problem described above, and thus affords an electrophoretic display device 5 with a good appearance and assured quality.

* Manufacturing a wristwatch

A method of manufacturing a wristwatch using a electrophoretic display device 5 according to this embodiment of the invention as the display panel is described next. Note that the electrophoretic display device 5 is an active matrix drive electrophoretic display device by way of example below, but the electrophoretic display device 5 may be a segment-driven electrophoretic display device.

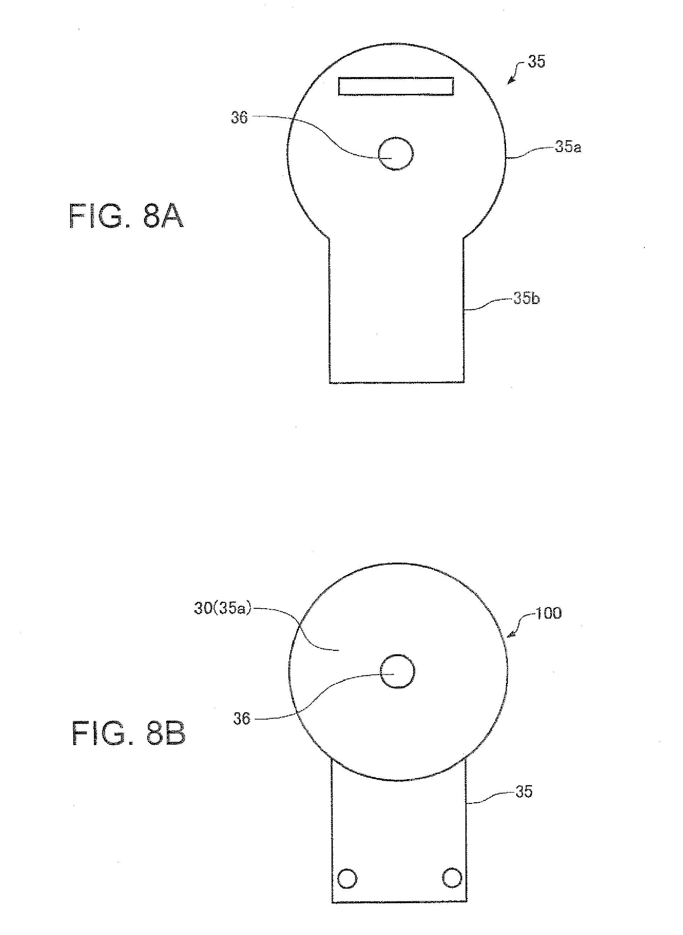

As shown in FIG. 8A, a device substrate 35 for a wristwatch is first prepared. A schematic plan view of this device substrate 35 for a wristwatch is shown in FIG. 8A. This device substrate 35 has an area 35a rendering the display area 5b, and an extension area 35b that extends from one side of the area 35a. The first through-hole 36 is rendered in the center of the area 35a. A pixel electrode layer 34 (not shown in the figure) is formed on the surface of the area 35a that becomes the display area 5b.

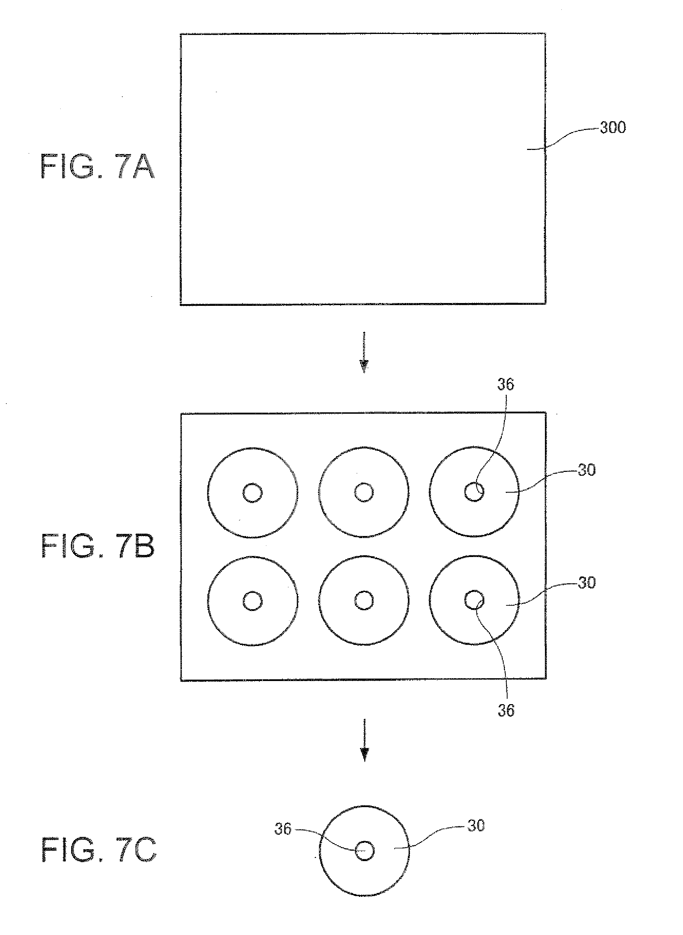

Electronic paper 300 as shown in FIG. 7A is also prepared. This electronic paper 300 is the electrophoretic display sheet 30 described above produced as a single large sheet.

A plurality of electrophoretic display sheets 30 that are laminated to this area 35a of the device substrate 35 are cut from the electronic paper 300 shown in FIG. 7A using a die as shown in FIG. 7B, producing the electrophoretic display sheets 30 shown in FIG. 7C.

As shown in FIG. 7C, the electrophoretic display sheet 30 blanks have a first through-hole 36 formed in the center thereof, and the general shape is substantially identical to the area 35a of the device substrate 35.

Next, as shown in FIG. 8B, the electrophoretic display sheet 30 is affixed to the area 35a of the device substrate 35 with the first through-holes 36 aligned and the pixel electrode layer 34 therebetween, forming the laminate 100.

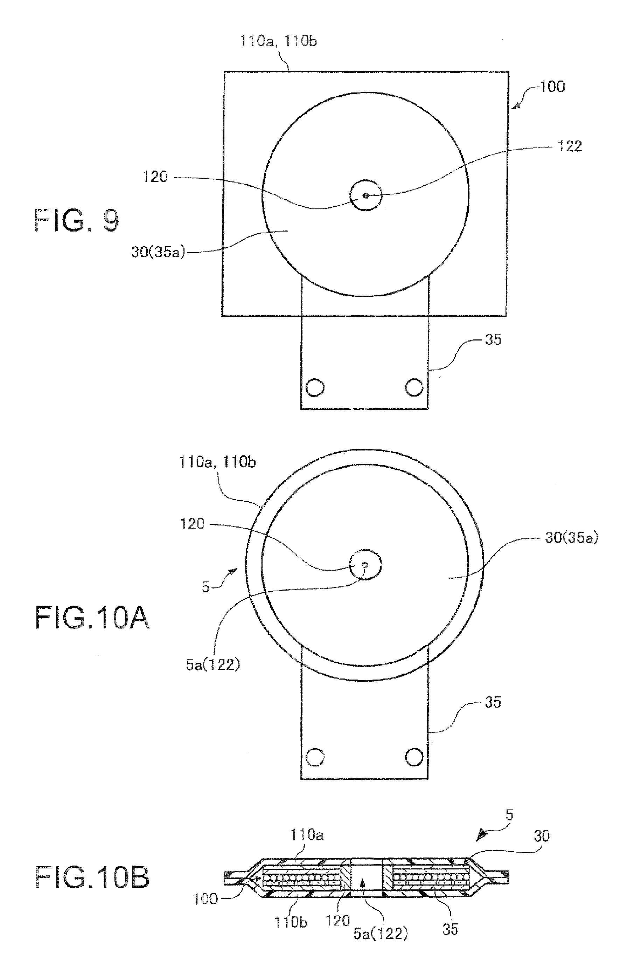

Next, as shown in FIG. 9, the ring member 120 is disposed in the first through-hole 36 of the laminate 100.

Next, as shown in the same figure, the two protective sheets 110a and 110b having a ring hole 122 inside the ring member 120, that is, having a through-hole 5a of the same diameter as the foregoing through-hole 5a, are prepared, and the protective sheets 110a and 110b are positioned on the opposite sides of the laminate 100 so that the positions of the through-holes 5a are aligned.

Note that the protective sheets 110a and 110b are made to cover a wider area than the surface of the laminate 100.

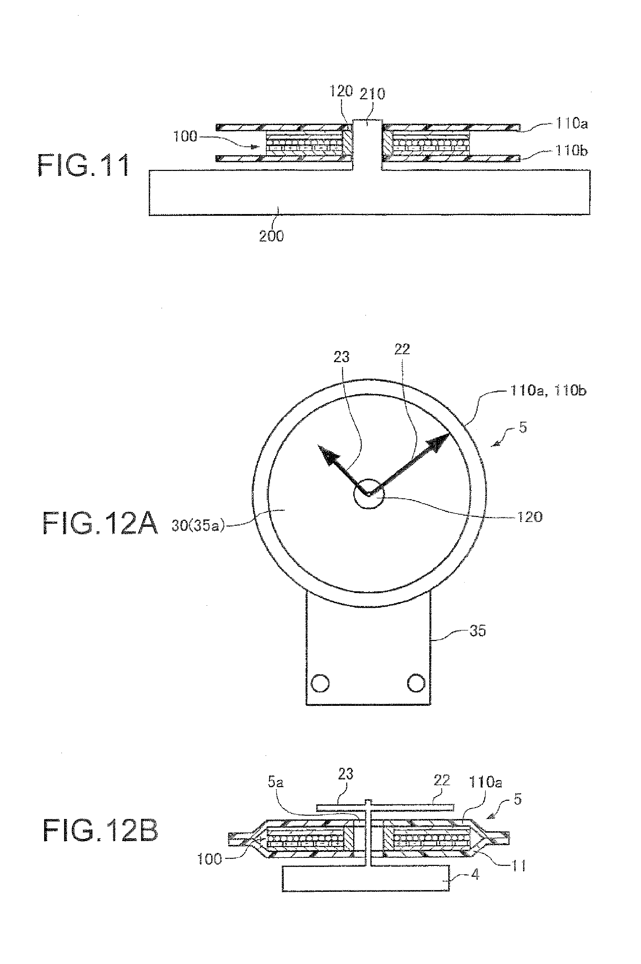

FIG. 11 shows an example of a jig used to produce such an assembly. A positioning pin 210 that is inserted to the through-hole 5a is disposed in the middle of the jig 200.

An adhesive not shown is first applied to the back side of the protective sheets 110a and 110b before positioning and assembling the members.

To produce the electrophoretic display device 5, the protective sheet 110b, the laminate 100 with the ring member 120 in place, and the other protective sheet 110a are layered together by passing the positioning pin 210 through the through-hole 5a of each member in this order.

Positioning the members is completed with the through-holes 5a aligned.

By then pressing the protective sheets 110a and 110b to the laminate 100 using a machine not shown, the laminate 100 is desirably laminated with the protective sheets 110a and 110b from both sides, and the inside circumference side of the protective sheets 110a and 110b is reliably bonded to both ends of the ring member 120 while the outside circumference side is reliably bonded to the outside circumference side of the laminate 100.

Excess material on the outside circumference side of the protective sheets 110a and 110b is then cut away, resulting in an electrophoretic display device 5 for a wristwatch as shown in FIG. 10A and 10B.

The stems of the movement 4 are then inserted to the through-hole 5a in the electrophoretic display device 5 for a wristwatch thus produced, and the minute hand 22 and hour hand 23 are attached to the distal ends of the stems; as shown in Figs. 12A and 12B.

This process produces a wristwatch that uses the electrophoretic display device 5 as a display panel in combination with an analog time display using a minute hand and hour hand. In addition, even though a stem hole (through-hole 5a) is rendered in the electrophoretic display device 5, the stem hole can be sealed with a narrow seal that does not detract from the appearance of the product as a wristwatch while also assuring sufficient water resistance.

Note that when the electrophoretic display device 5 is a segment-driven electrophoretic display device, the device substrate corresponds to the wiring board, the pixel electrode layer corresponds to the segment electrode layer, and the electrophoretic display device 5 can be manufactured using the same process.

It will be obvious to one with ordinary skill in the related art that the invention is not limited to the foregoing embodiment and can be modified in many ways without departing from the scope of the accompanying claims.

For example, the through-hole 5a formed in the electrophoretic display device in the foregoing embodiment is described as being used to render a stem hole for an analog wristwatch, but the invention is not so limited and other types of through-holes can be formed, such as a through-hole used as a calendar window for displaying the weekday on the wristwatch. The shape of the through-hole is also not limited to round or rectangular, and can be shaped as needed or desired.

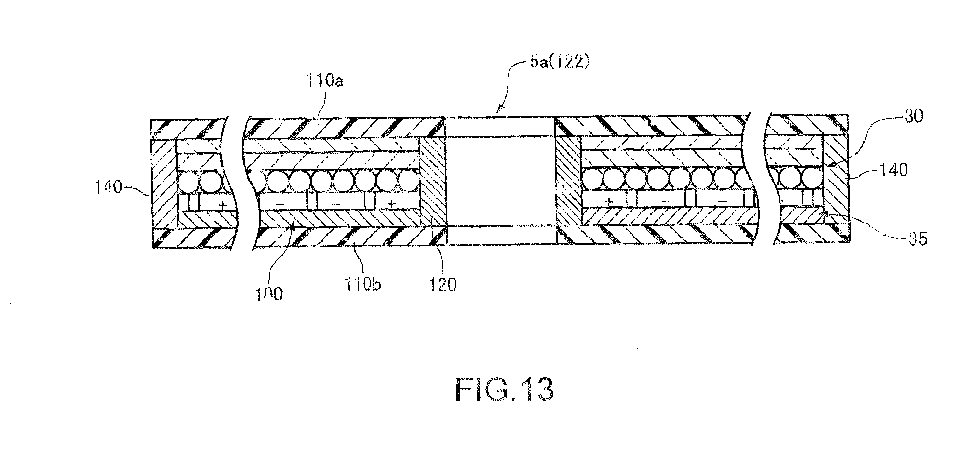

Further alternatively as shown in FIG. 13, the invention can also render a configuration having an outside ring member 140 that has the same thickness as the laminate 100 disposed flush with both sides of the laminate 100, thus sealing the outside circumference edges of the laminate 100. This outside ring member 140 is preferably made from a material with higher mechanical strength than the laminate, and can be made from various types of metal, for example.

When a outside ring member 140 such as described above is used, the outside circumference edge parts of the pair of protective sheets 110a and 110b preferably cover and are bonded to both end surfaces of the outside ring member 140. When thus configured damage to the outside circumference edges when laminating the laminate 100 can be reliably prevented by the outside ring member 140 in the same way that damage around the through-hole 5a is prevented by the inside ring member 120.

The foregoing is also described using an electrophoretic display layer containing microcapsules by way of example, but the invention is not so limited and the invention can be applied when other types of electrophoretic display layers are used, such as when a horizontal migration electrophoretic display layer or vertical migration electrophoretic display layer is used.

The foregoing embodiment is also described as applying the electrophoretic display device to a wristwatch or other type of timepiece, but the invention is not so limited and can be used as an electrophoretic display device for other types of electronic devices.

Note, further, than an electronic device as used herein means any device having an electrophoretic display device as a display unit, and includes display devices, televisions, electronic books, electronic paper ("e-paper"), personal digital assistant devices, calculators, cell phones, and portable data terminals.

Yet further, an electronic device as used herein includes objects that deviate from the common concept of a "devices," including, for example, flexible paper-like or film-like objects, wall paper and other building products and real property to which such a flexible paper-like or film-like object may be affixed, and mobile bodies such as vehicles, aircraft, and boats.

The invention being thus described, it will be obvious that it may be varied in many ways. Such variations are not to be regarded as a departure from the spirit and scope of the invention, and all such modifications as would be obvious to one skilled in the art are intended to be included within the scope of the following claims.

## Claims

1. An electrophoretic display device comprising at least:
a laminate including a transparent substrate, a transparent electrode layer, an electrophoretic display layer, a drive electrode layer having drive electrodes for driving the electrophoretic display layer, and a back substrate laminated sequentially from the display surface side; and
protective sheet that covers and seals the laminate from both sides;
wherein the transparent electrode layer is formed as a common electrode to the electrophoretic display layer,
a through-hole unit is formed passing through the thickness of the laminate,
an inside ring member that has substantially the same thickness as the laminate is disposed substantially flush to both sides of the laminate with a specific seal width sealing the inside circumference edge of a first through-hole formed at a specific position through the thickness of the laminate,
the protective sheet covers and seals the substantially flush laminate and inside ring member from both sides, and
the ring hole inside the ring member is the through-hole unit.

2. The electrophoretic display device described in claim 1, further comprising:
an outside ring member that has substantially the same thickness as the laminate and is disposed sealing the outside circumference edge of the laminate substantially flush with both sides of the laminate;
wherein the protective sheet covers and seals the substantially flush laminate, inside ring member, and outside ring member from both sides.

3. The electrophoretic display device described in claim 1 or claim 2, wherein:
the ring member is formed as a member with greater mechanical strength than the laminate.

4. A wristwatch comprising:
a movement, a display hand attached to a hand attachment member of the movement, and a display panel disposed between the movement and the display hand inside a timepiece case;
wherein an electrophoretic display device according to any one of preceding claims 1 to 3 is used as the display panel, and
the through-hole unit in the electrophoretic display device is formed as a stem hole through which the hand attachment member passes.

5. A method of manufacturing an electrophoretic display device electrophoretic display device having at least
a laminate including a transparent substrate, a transparent electrode layer, an electrophoretic display layer, a drive electrode layer having drive electrodes for driving the electrophoretic display layer, and a back substrate laminated sequentially from the display surface side, and
a protective sheet that covers and seals the laminate from both sides,
wherein the transparent electrode layer is formed as a common electrode to the electrophoretic display layer, and
a through-hole unit is formed passing through the thickness of the laminate,
the manufacturing method comprising steps of:
disposing an inside ring member that has substantially the same thickness as the laminate to the inside circumference edge of a first through-hole formed through the thickness of the laminate so that the inside ring member is substantially flush to both sides of the laminate; and
covering and sealing the substantially flush laminate and inside ring member from both sides with the protective sheet, and rendering the ring hole inside the ring member as the through-hole unit.
